# FASCICULE DE BREVET EUROPEEN

(11) **EP 1 541 467 B1**
(45) Date de publication et mention de la délivrance du brevet: **03.01.2007**
(21) Numéro de dépôt: 04022024.6
(22) Date de dépôt: 16.09.2004
(51) Int. Cl.: B64D 15/22

(54) **Dispositif de dégivrage/antigivrage modulaire d'une surface aérodynamique**
Modulare Enteisungsvorrichtung für eine aerodynamische Fläche
Modular de-icing device for an aerodynamic surface

(30) Priorité: 12.12.2003 FR 0314616
(43) Date de publication de la demande: 15.06.2005
(73) Titulaire: EUROCOPTER, 13725 Marignane Cédex (FR)
(72) Inventeur: Bourjac, Didier, 13700 Marignane (FR); Cuadrado, Gérard, 13620 Carry Le Rouet (FR)
(74) Mandataire: Renaud-Goud, Thierry

(56) Documents cités:
- EP-A- 0 680 878
- US-A- 2 552 075
- US-A- 4 410 794
- US-A- 5 206 806
- US-A- 5 763 858
- US-A- 5 772 153
- US-B1- 6 181 235

## Description

La présente invention concerne un dispositif de dégivrage/antigivrage modulaire d'une surface aérodynamique. Plus particulièrement, les surfaces aérodynamiques concernées sont celles dont le profil aérodynamique ne doit pas être perturbé par la formation de glace. Ces surfaces aérodynamiques correspondent notamment à des pales de giravion (rotor principal ou rotor anti-couple) ou encore à des ailes d'avion.

Le problème du givrage de telles surfaces aérodynamiques est bien connu dans l'industrie aéronautique. Le profil aérodynamique de ces surfaces peut être modifié en raison de la formation de glace résultant de ce que, en vol, la surface aérodynamique rencontre des gouttelettes d'eau en surfusion contenues dans l'atmosphère.

Ce problème est souvent traité en équipant la surface aérodynamique d'une structure chauffante.

Pour ce faire, et dans le cas d'un giravion, par exemple, plusieurs résistances chauffantes sont noyées dans les pales du rotor principal ou du rotor arrière. En vue de réduire de façon conséquente la consommation de courant électrique, les différentes résistances sont alimentées cycliquement, et non pas simultanément.

On connaît, par le document EP 014.334, un dispositif de ce type qui distribue de façon séquentielle et cyclique du courant électrique à plusieurs modules de dégivrage/antigivrage. Chaque module est physiquement et électriquement alimenté indépendamment des autres. Par conséquent, les liaisons entre ces modules et l'organe de commutation de puissance, comportent un nombre important de câbles ce qui est extrêmement pénalisant en terme de masse.

Quant à la consommation électrique, chaque module est alimenté de façon cyclique, pendant un temps déterminé pour assurer une température suffisante à la peau de la pale. Néanmoins, du fait des variations de l'écoulement de l'air sur la surface aérodynamique, de la présence éventuelle d'eau ou de givre et de l'absence d'asservissement de la température de l'élément chauffant, il se peut que la pale soit trop chauffée, ce qui pourrait finalement conduire à une destruction de la peau, voire de la structure interne, de cette dernière.

On connaît aussi, par le document US-A-2,552,072, un dispositif de dégivrage/antigivrage avec toutes les caractéristiques du préambule de la revendication 1.

La présente invention a pour objet de proposer un dispositif actif de dégivrage/antigivrage, efficace quelles que soient les conditions givrantes rencontrées au cours du vol, permettant de s'affranchir des limitations des dégivreurs mentionnés ci-dessus.

Selon l'invention, telle que definie par la revendication indépendante 1, un dispositif de dégivrage/antigivrage d'une voilure d'aéronef, cette voilure comportant au moins une première surface aérodynamique possédant au moins deux modules de dégivrage/antigivrage qui sont chacun pourvu d'un élément chauffant, est remarquable en ce que les éléments chauffants des modules sont alimentés électriquement de façon avantageuse via un même moyen d'alimentation électrique, au moins une unité de régulation commande lesdits éléments chauffants afin que chaque module assure le chaque module assure le dégivrage/antigivrage de sa zone indépendamment de l'autre, ladite unité de régulation étant réalisée sur un support flexible facilement intégrable dans la surface aérodynamique.

Il est en outre avantageux que le dispositif de chauffage possède une ou plusieurs des caractéristiques suivantes :
- au moins deux éléments chauffants sont commandés par une même unité de régulation.
- l'unité de régulation dialogue avec au moins deux éléments chauffants d'une surface aérodynamique via un moyen de communication secondaire agencé dans la surface aérodynamique.
- chaque élément chauffant est commandé par sa propre unité de régulation.
- l'unité de régulation commande l'alimentation électrique d'au moins un élément chauffant lorsqu'un premier signal de mesure issu d'au moins un capteur de température est inférieur à un seuil de déclenchement prédéterminé.
- l'unité de régulation reçoit un signal de contrôle issu d'un capteur de givre, cette unité de régulation alimentant électriquement l'élément chauffant selon ce signal de contrôle.
- l'unité de régulation est reliée à une unité de traitement centrale via un moyen de communication principal.
- une même surface aérodynamique étant munie d'une unité de contrôle à sa base reliée à l'unité de traitement centrale via un moyen de communication principal, l'unité de contrôle est reliée à chaque unité de régulation de cette même surface aérodynamique via un moyen de communication secondaire.
- l'unité de traitement centrale comporte une prise de diagnostic et un microprocesseur central avec sa mémoire et ses interfaces.
- le capteur de température est réalisé sur un support flexible.
- l'unité de contrôle est réalisée sur un support flexible.
- l'élément chauffant est réalisé sur un support flexible.
- l'élément chauffant comporte un organe de commutation et une surface chauffante.
- la surface chauffante comporte au moins deux sections chauffantes.
- le moyen d'alimentation électrique est redondé par mesure de sécurité.
- les moyens de communication principal et secondaire sont composés de deux bus utilisant un protocole bidirectionnel.
- les moyens de communication principal et secondaire sont des fibres optiques.
- les moyens de communication principal et secondaire utilisent un mode de transmission des données sans fil.
- le moyen d'alimentation ainsi que le moyen de communication principal sont composés d'un unique câble porteur.

L'invention et ses avantages apparaîtront avec plus de détails dans le cadre de la description qui suit avec des exemples de réalisation donnés à titre illustratif en référence aux figures annexées qui représentent :
- la figure 1, l'architecture schématique d'un dispositif de dégivrage/antigivrage d'un giravion comprenant quatre modules de dégivrage/antigivrage sur chacune des cinq pales du giravion,
- les figures 2 à 5, une pale munie de quatre modules de dégivrage/antigivrage bâtis selon quatre modes de réalisation différents,
- la figure 6, une coupe transversale d'un tronçon de pale muni d'un module de dégivrage/antigivrage,
- la figure 7, une vue isométrique d'un tronçon de pale muni d'un module de dégivrage/antigivrage,
- la figure 8, un schéma fonctionnel d'un module de dégivrage/antigivrage,
- la figure 9, une vue d'un élément chauffant muni de capteurs de température,
- la figure 10, une coupe transversale d'un élément chauffant muni d'une section chauffante, et
- la figure 11, une coupe transversale d'un élément chauffant muni de trois sections chauffantes.

Les éléments présents dans plusieurs figures distinctes sont affectés d'une seule et même référence.

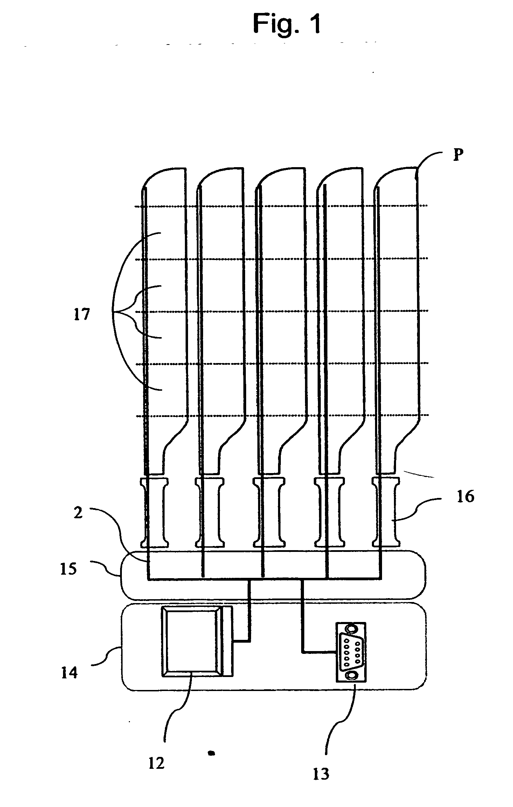

La figure 1 présente les différents organes d'un système de dégivrage/antigivrage d'un giravion comprenant cinq pales P, à savoir une unité de traitement centrale 14 munie d'une prise de diagnostic 13 et d'un microprocesseur central 12 avec sa mémoire et ses interfaces, un collecteur rotatif 15 de type connu permettant la transmission des alimentations électriques et des moyens de communication du fuselage au rotor tournant du giravion, cinq harnais 16 contenant chacun un moyen d'alimentation électrique redondé, ainsi qu'un moyen de communication principal 2.

De plus, chaque pale est équipée de quatre modules de dégivragelantigivrage 17 répartis sur l'envergure de la pale. Le nombre de ces modules pourrait être différent et ajusté en fonction de la longueur de l'envergure de la pale. Chaque module 17 assure le dégivrage/antigivrage de sa zone, indépendamment des modules voisins. Ainsi, le dégivrage/antigivrage d'une pale est réellement modulaire puisque, suivant le besoin, une première partie de la pale peut par exemple être dégivrée, une seconde partie antigivrée alors qu'aucune action de dégivrage/antigivrage ne sera entreprise sur une troisième et une quatrième partie de cette pale.

L'unité de traitement centrale 14 dialogue avec chaque module 17 via un unique moyen de communication principal 2. Ce moyen de communication principal 2 sera de façon avantageuse un bus utilisant un protocole de communication bidirectionnel, par exemple de type CAN. L'unité de traitement centrale 14 peut ainsi avoir accès à toutes les données (température, présence de givre) détenues par les modules 17. Il devient par conséquent possible de visualiser en cockpit la température des pales et de vérifier, à des fins de maintenance ou de sécurité, que les composants constituant les modules 17 fonctionnent correctement sans intervenir sur ces modules 17 ou les pales. Cette visualisation peut aussi être réalisée en connectant un micro-ordinateur à la prise de diagnostic 13.

Via le microprocesseur central 12, le pilote peut, à l'aide d'une boîte de commande localisée dans le cockpit, modifier en temps réel par programmation les seuils de déclenchement du dispositif de dégivrage/antigivrage en fonction de la sévérité du givrage.

Les modules 17 d'une même pale sont alimentés électriquement par un unique moyen d'alimentation, un câble d'alimentation électrique par exemple, alors qu'auparavant, il fallait un câble par module. Ainsi, on réduit considérablement le nombre de câble et par conséquent la masse et le coût des harnais, du collecteur ainsi que ceux des connecteurs électriques.

Afin de respecter les exigences de sécurité applicables à la fonction, le moyen d'alimentation électrique sera redondé. En cas de rupture d'un de ces moyens d'alimentation, les modules seront donc toujours électriquement alimentés.

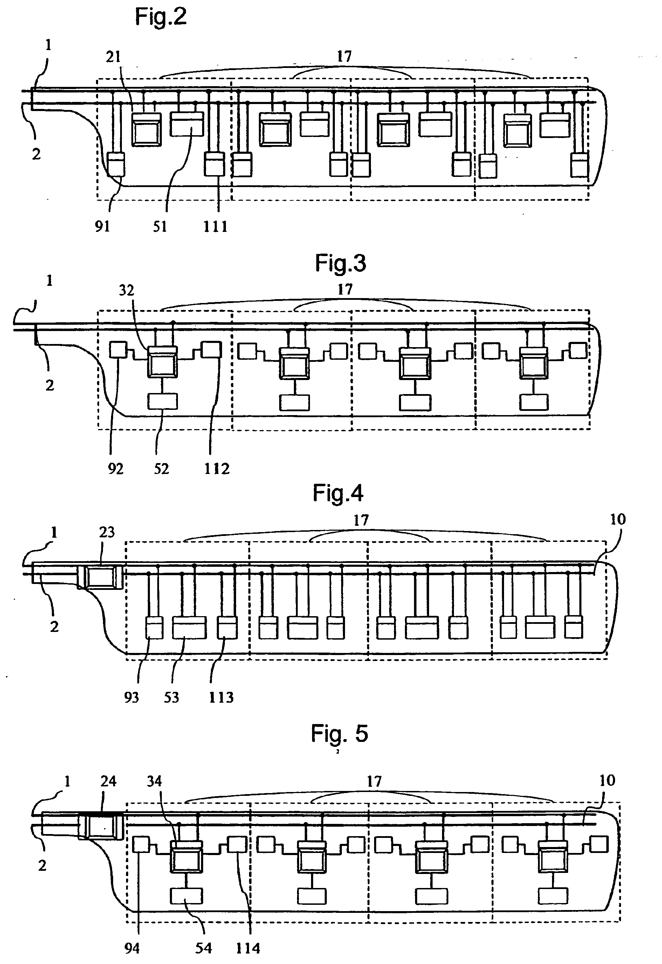

La figure 2 présente un premier mode de réalisation. Chaque module 17 est équipé d'une première unité de régulation 21, un microprocesseur périphérique par exemple. Cette première unité de régulation 21 reçoit un premier signal de mesure d'un capteur de température 91 et un premier signal de contrôle d'un capteur de givre 111 pour commander un premier élément chauffant 51. Tous ces composants sont dotés d'une interface CAN et sont reliés au moyen de communication principal 2.

Ce système repose sur l'unique moyen de communication principal 2 ce qui en facilite grandement la mise en oeuvre. De plus, tous les modules 17 d'une même pale sont alimentés par un unique moyen d'alimentation électrique 1, un câble d'alimentation électrique par exemple.

La figure 3 présente un second mode de réalisation. Chaque module 17 est équipé d'une deuxième unité de régulation 32, un microcontrôleur par exemple, relié au bus de communication principal 2 et doté d'une interface CAN. Cette deuxième unité de régulation 32 reçoit un deuxième signal de mesure d'un capteur de température 92 et un deuxième signal de contrôle d'un capteur de givre 112 pour commander un deuxième élément chauffant 52.

En outre, la mise en oeuvre d'un microcontrôleur permet une meilleure intégration des éléments périphériques (capteurs de température, de givre et éléments chauffants). Chacun de ces éléments périphériques est identifiable grâce à sa connexion prédéfinie sur l'une des broches du microcontrôleur. Les modules de dégivrage/antigivrage sont totalement autonomes. Le microcontrôleur dialogue via le moyen de communication principal 2 avec le microprocesseur central 12 ou la prise de diagnostic 13 ce qui facilite les opérations de tests et de maintenance.

Ce deuxième mode de réalisation réduit considérablement le nombre de composants connectés au moyen de communication principal 2. Les données peuvent donc être transmises beaucoup plus rapidement.

La figure 4 présente un troisième mode de réalisation. Une troisième unité de régulation est ici commune à tous les modules 17 de la pale. Cette troisième unité de régulation 23 dotée de deux interfaces CAN, un microprocesseur auxiliaire par exemple, est agencée en pied de pale. La double interface CAN permet l'établissement d'une passerelle entre le moyen de communication principal 2 et un moyen de communication secondaire 10 qui sera de façon avantageuse un bus utilisant un protocole bidirectionnel. Par conséquent, la troisième unité de régulation 23 est reliée au microprocesseur central 12, via le moyen de communication principal 2, ainsi qu'aux différents modules 17 de dégivrage/antigivrage de la pale, via le moyen de communication secondaire 10 propre à la pale.

Chaque module 17 est équipé d'un capteur de température 93, d'un capteur de givre 113 et d'un élément chauffant 53, tous ces composants étant dotés d'une interface CAN qui leur permettent de se connecter au bus de communication secondaire 10. Ces capteurs de température 113 et de givre 93 renseignent la troisième unité de commande 23 qui commande l'élément chauffant 53 en conséquence.

La figure 5 présente un quatrième mode de réalisation particulièrement avantageux. Une quatrième unité de régulation 34 est propre à chaque module 17 de la pale. De plus, une unité de contrôle 24, commune à tous les modules de la pale, est montée en pied de pale. Cette unité de contrôle 24 est composée d'un microprocesseur auxiliaire doté de deux interfaces CAN relié aux moyens de communication principal 2 et secondaire 10. La quatrième unité de régulation 34, composée d'un microcontrôleur doté d'une interface CAN relié au bus 10, reçoit un quatrième signal de mesure d'un capteur de température 94 et un quatrième signal de contrôle d'un capteur de givre 114 pour commander un élément chauffant 54.

Cette architecture offre l'avantage d'avoir une fonction centrale en pied de pale. Les informations enregistrées par les capteurs (température, présence de givre) sont transférées au microprocesseur central 12, via le moyen de communication principal 2, par l'unité de contrôle 24. Ainsi, le pilote pourra avoir accès à ces données.

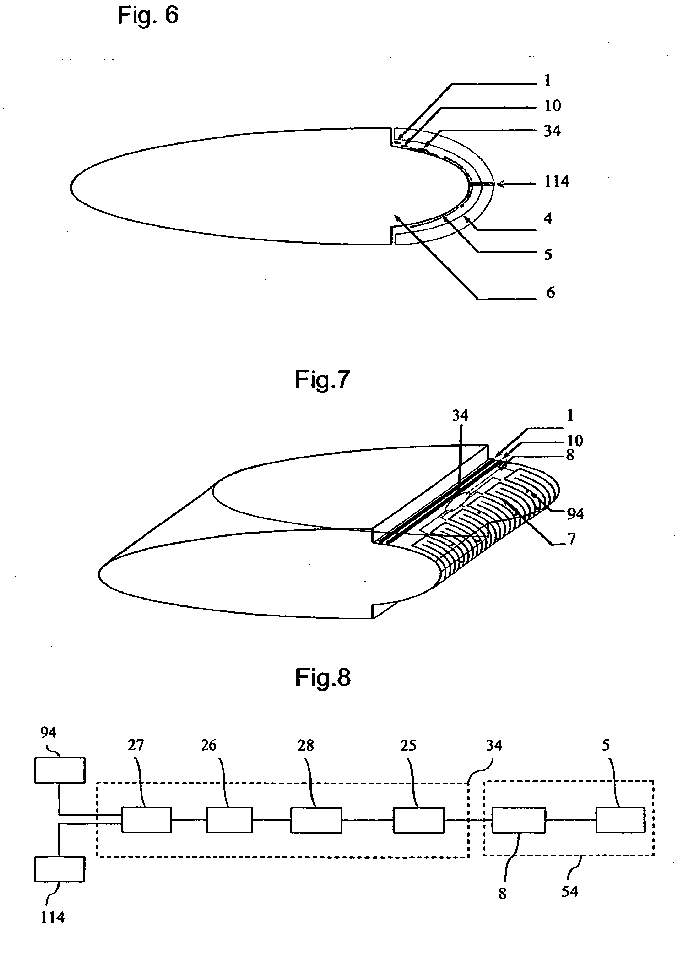

En référence aux figures 6, 7 et 8, chaque module de dégivrage/antigivrage 17, est partiellement noyé dans un tronçon de pale entre le coeur 6 et le blindage du bord d'attaque 4 de ce tronçon. Le capteur de givre 114 devant rester au contact du givre pour fonctionner, il n'est pas inséré dans la pale mais est localisé sur la peau de cette pale.

Les capteurs de température 94 enregistrent la température de la pale dans leur zone de détection et transmettent chacun un quatrième signal de mesure sous la forme d'une tension analogique à un port d'entrée de la quatrième unité de régulation 34.

De la même façon, un quatrième signal de contrôle est émis par le capteur de givre 114.

Pour pouvoir exploiter l'ensemble de ces signaux, la quatrième unité de régulation 34 dispose d'un convertisseur analogique/numérique 27. Cette quatrième unité de régulation 34 possède aussi un organe de corrélation 26 qui lui permet de déterminer la validité des informations puis la température moyenne du tronçon de pale. En cas d'incohérence (température élevée alors que l'on détecte la présence de givre, fortes variations entre deux capteurs de température distincts), une alarme sera renvoyée vers le microprocesseur central 12. De la même manière, cette procédure de validation pourra être réalisée par l'unité de contrôle 24 voire par le microprocesseur central 12.

Différents régimes de fonctionnement sont établis dans le but d'optimiser la puissance consommée par l'élément chauffant 54, cet élément chauffant 54 étant composé d'un organe de commutation 8 et d'une surface chauffante 5. Pour ce faire, des seuils de régulation ont été prédéfinis dans une table de conversion 28. Arbitrairement, on impose, par exemple, les intervalles de température suivants :
- supérieur à 80°C : cet intervalle ne correspond pas à des températures de fonctionnement normales de la pale. Par conséquent, une alarme de dysfonctionnement est envoyée à l'unité de traitement centrale 14 via le microprocesseur central 12 ou la prise de diagnostic 13 ;
- de 5°C à 80°C : pas de givre, l'élément chauffant 54 ne doit pas être activé ;
- de -5°C à 5°C : condition de givrage limitée, dégivrage faible pouvant être apparenté à de l'anti-givrage ;
- de -15°C à -5°C : condition de givrage avérée, dégivrage moyen ;
- de -60°C à -15°C : condition de givrage sévère, dégivrage puissant ;
- inférieur à -60°C : cet intervalle ne correspond pas à des températures de fonctionnement normales de la pale. Par conséquent, une alarme de dysfonctionnement est envoyée à l'unité de traitement centrale 14 via le microprocesseur central 12 ou la prise de diagnostic 13.

Ces différentes plages de température sont fournies à titre d'exemple. Elles sont modifiables à tout moment par les opérateurs, en vol ou au sol, suivant les conditions météorologiques.

Une fois le régime de dégivrage choisi, la table 28 envoie un signal numérique au convertisseur numérique/ analogique 25 de la quatrième unité de régulation 34 qui transmet une tension analogique à l'organe de commutation de puissance 8 de l'élément chauffant 54.

Cet organe de commutation 8 peut être constitué d'un transistor MOS (« *Metal Oxyd Semiconductor »* selon l'appellation anglaise), d'un transistor MOSFET (« *Metal Oxyd Semiconductor Field Effect Transistor »* selon l'appellation anglaise), d'un IGBT(« *Isolated Gate Bipolar Transistor »* selon l'appellation anglaise) ou d'un GTO(« *Gate turn Off »* selon l'appellation anglaise). Selon la tension reçue, l'organe de commutation 8 fournira plus ou moins de puissance à la surface chauffante 5.

Les signaux analogiques, issus des différents capteurs, sont donc dirigés vers la quatrième unité de régulation 34 qui analyse les données, les traite et génère des sorties directement applicables sur l'organe de commutation 8, celui-ci se chargeant alors de contrôler la puissance dissipée par la surface chauffante 5.

Chaque module de dégivrage/antigivrage 17 fonctionne ainsi de façon autonome et se gère indépendamment des autres. Une coupure des bus de communication principal 2 ou secondaire 10 n'a par conséquent aucune incidence sur la fonction dégivrage/antigivrage qui continue d'être assurée sans destruction de la pale.

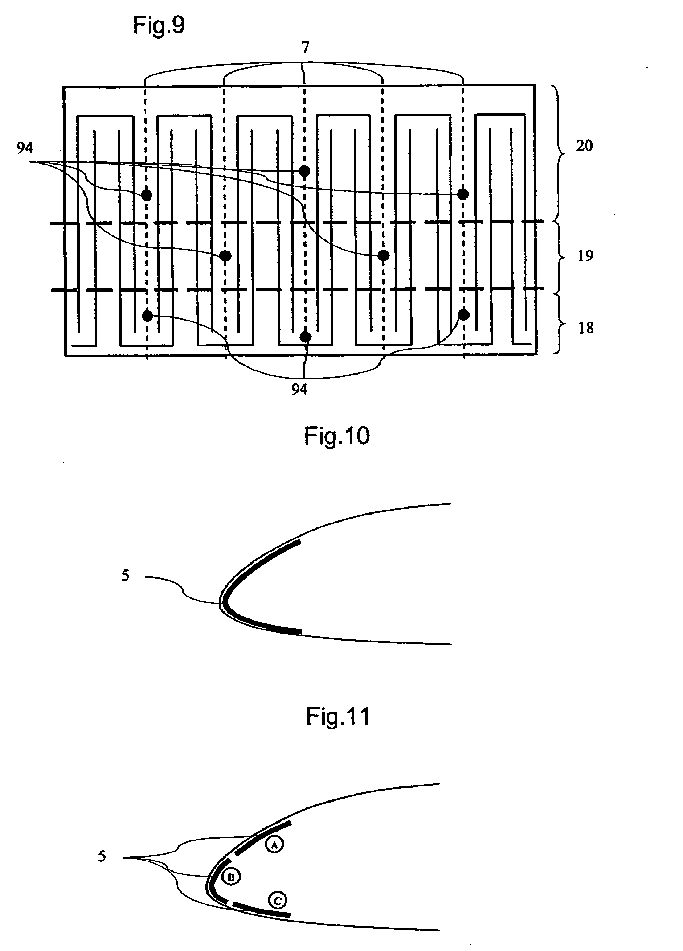

De préférence, en référence à la figure 9, la surface chauffante 5 est réalisée sur un support souple, sur lequel sont aussi disposés les capteurs de température 94. Ces capteurs seront installés dans des zones non chauffantes 7 afin de restituer fidèlement la température de la pale. Grâce à sa flexibilité, la surface chauffante 5 peut s'appliquer sur le bord d'attaque d'une pale en épousant sa forme.

De la même manière, on réalisera l'unité de régulation, l'unité de contrôle et les capteurs de températures sur des supports flexibles afin de faciliter leur intégration dans la pale.

En référence à la figure 10, la surface chauffante 5 comporte qu'une section chauffante.

Cependant, en référence à la figure 11, de manière avantageuse, la surface chauffante 5 comporte trois sections chauffantes A,B et C. L'expérience a démontré que la formation de givre était plus sévère sur le bord d'attaque 19 que l'extrados 20 ou l'intrados 18 de la pale. Par conséquent, l'unité de régulation fournira plus de puissance à la surface B qu'aux surfaces A et C ce qui permet d'optimiser la consommation de courant électrique.

Dans une première variante de ces modes de réalisation, on prévoit un seul capteur de givre installé en pied de pale au lieu d'un capteur par module.

Dans une seconde variante de ces modes de réalisation, dans le but d'optimiser au mieux l'intégration des moyens de communication principal 2 et secondaire 10 dans la pale, il est judicieux d'utiliser des fibres optiques capables de transporter des informations binaires. Un collecteur rotatif 15 fonctionnant à l'aide d'un système optique sera alors utilisé de façon préférentielle ce qui réduira d'autant les risques d'usure dus à la fatigue.

Dans une troisième variante de ces modes de réalisation, les moyens de communication principal 2 et secondaire 10 utilisent un mode de transmission des données sans fil de type « Wireless », dénommé ainsi selon l'appellation anglaise.

Dans une quatrième variante de ces modes de réalisation, les moyens de communication principal 2 et secondaire 10 ainsi que le moyen d'alimentation électrique 1 sont composés d'un unique câble porteur. Ce câble porteur utilise la technologie dite courant porteur qui consiste à superposer à un courant d'alimentation des informations codées, notamment par modulation de fréquence.

Dans un mode de fonctionnement pénalisant, il est envisageable que tous les modules de l'appareil soient activés, à pleine puissance, en même temps. Dans ces conditions, l'alternateur de l'aéronef pourrait s'avérer sous dimensionné. Pour cette raison, selon la puissance surfacique totale à atteindre, le microprocesseur central pourra forcer les unités de régulation à fonctionner selon un mode séquentiel connu.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de dégivrage/antigivrage d'une voilure d'un aéronef, cette voilure comportant au moins une première surface aérodynamique, ce dispositif de dégivrage/antigivrage possédant au moins deux modules (17) de dégivrage/antigivrage, chaque module (17) étant pourvu d'un élément chauffant (51, 52, 53, 54), de façon que lesdits éléments chauffants (51, 52, 53, 54) desdits modules (17) soient alimentés électriquement via un même moyen d'alimentation électrique (1)
**caractérisé en ce que**, au moins une unité de régulation (21, 32, 23, 34) commande lesdits éléments chauffants afin que chaque module (17) assure le dégivrage/antigivrage de sa zone indépendamment de l'autre, ladite unité de régulation (21, 32, 23, 34) étant réalisée sur un support flexible facilement intégrable dans la surface aérodynamique.

2. Dispositif selon la revendication 1,
**caractérisé en ce qu'**au moins deux éléments chauffants (53) d'une même surface aérodynamique sont commandés par une même unité de régulation (23).

3. Dispositif selon la revendication 2,
**caractérisé en ce que** ladite unité de régulation (23) dialogue avec au moins deux éléments chauffants (53) d'une même surface aérodynamique via un moyen de communication secondaire (10) agencé dans ladite surface aérodynamique.

4. Dispositif selon la revendication 1,
**caractérisé en ce que** chaque élément chauffant d'une même surface aérodynamique (51, 52, 54) est commandé par sa propre unité de régulation (21, 32, 34)

5. Dispositif selon l'une quelconque des revendications précédentes,
**caractérisé en ce que** l'unité de régulation (21, 32, 23, 34) commande l'alimentation électrique d'au moins un élément chauffant (51, 52, 53, 54) lorsqu'un premier signal de mesure issu d'au moins un capteur de température (91, 92, 93, 94) est inférieur à un seuil de déclenchement prédéterminé.

6. Dispositif selon l'une quelconque des revendications précédentes,
**caractérisé en ce que** l'unité de régulation (21, 32, 23, 34) reçoit un signal de contrôle issu d'au moins un capteur de givre (111, 112, 113, 114), ladite unité de régulation (21, 32, 23, 34) alimentant électriquement ledit élément chauffant (51, 52, 53, 54) selon ledit signal de contrôle.

7. Dispositif selon l'une quelconque des revendications précédentes,
**caractérisé en ce que** ladite unité de régulation (21, 32, 23) est reliée à une unité de traitement centrale (14) via un moyen de communication principal (2).

8. Dispositif selon l'une quelconque des revendications 1 à 6,
**caractérisé en ce qu'**une même surface aérodynamique étant munie d'une unité de contrôle (24) à sa base reliée à ladite unité de traitement centrale (14) via un moyen de communication principal (2), ladite unité de contrôle (24) est reliée à chaque unité de régulation (34) de ladite surface aérodynamique via ledit moyen de communication secondaire (10).

9. Dispositif selon l'une quelconque des revendications précédentes,
**caractérisé en ce que** ladite unité de traitement centrale (14) comporte une prise de diagnostic (13) et un microprocesseur central (12) avec sa mémoire et ses interfaces.

10. Dispositif selon l'une quelconque des revendications précédentes,
**caractérisé en ce que** ledit capteur de température (91, 92, 93, 94) est réalisé sur un support flexible.

11. Dispositif selon l'une quelconque des revendications précédentes,
**caractérisé en ce que** ladite unité de contrôle (24) est réalisée sur un support flexible.

12. Dispositif selon l'une quelconque des revendications précédentes,
**caractérisé en ce que** ledit élément chauffant (51, 52, 53, 54) est réalisé sur un support flexible.

13. Dispositif selon l'une quelconque des revendications précédentes,
**caractérisé en ce que** ledit élément chauffant (51, 52, 53, 54) est composé d'un organe de commutation (8) et d'une surface chauffante (5).

14. Dispositif selon l'une quelconque des revendications précédentes,
**caractérisé en ce que** ladite surface chauffante (5) comporte au moins deux sections chauffantes.

15. Dispositif selon l'une quelconque des revendications précédentes,
**caractérisé en ce que** ledit moyen d'alimentation électrique (1) est redondé.

16. Dispositif selon l'une quelconque des revendications précédentes,
**caractérisé en ce que** ledit moyen de communication principal (2) est un bus bifilaire utilisant un protocole bidirectionnel.

17. Dispositif selon l'une quelconque des revendications précédentes,
**caractérisé en ce que** ledit moyen de communication secondaire (10) est un bus bifilaire utilisant un protocole bidirectionnel.

18. Dispositif selon l'une quelconque des revendications précédentes,
**caractérisé en ce que** lesdits moyens de communications principal (2) et secondaires (10) sont des fibres optiques.

19. Dispositif selon l'une quelconque des revendications 1 à 15,
**caractérisé en ce que** lesdits moyens de communications principal (2) set secondaires (10) utilisent un mode de transmission des données sans fil.

20. Dispositif selon l'une quelconque des revendications 1 à 15,
**caractérisé en ce que** ledit moyen d'alimentation électrique (1) ainsi que ledit moyen de communication principal (2) sont composés d'un unique câble porteur.

## Claims

1. A de-icing/anti-icing device for a wing unit of an aircraft, this wing unit having at least one first aerodynamic surface, this de-icing/anti-icing device including at least two de-icing/anti-icing modules (17), each module (17) being provided with a heating element (51, 52, 53, 54) such that the said heating elements (51, 52, 53, 54) of the said modules (17) are supplied with electrical power by way of one and the same electrical power supply means (1), **characterised in that** at least one regulating unit (21, 32, 23, 34) controls the said heating elements such that each module (17) removes the ice/prevents the formation of ice on its zone, independently of the other one, the said regulating unit (21, 32, 23, 34) being formed on a flexible support which may easily be integrated in the aerodynamic surface.

2. A device according to Claim 1, **characterised in that** at least two heating elements (53) of one and the same aerodynamic surface are controlled by one and the same regulating unit (23).

3. A device according to Claim 2, **characterised in that** the said regulating unit (23) communicates with at least two heating elements (53) of one and the same aerodynamic surface by way of a secondary communication means (10) arranged in the said aerodynamic surface.

4. A device according to Claim 1, **characterised in that** each heating element of one and the same aerodynamic surface (51, 52, 54) is controlled by its own regulating unit (21, 32, 34).

5. A device according to any one of the preceding claims, **characterised in that** the regulating unit (21, 32, 23, 34) controls the supply of electrical power to at least one heating element (51, 52, 53, 54) when a first measuring signal emitted by at least one temperature sensor (91, 92, 93, 94) is below a predetermined trigger threshold.

6. A device according to any one of the preceding claims, **characterised in that** the regulating unit (21, 32, 23, 34) receives a check signal emitted by at least one ice sensor (111, 112, 113, 114), the said regulating unit (21, 32, 23, 34) supplying the said heating element (51, 52, 53, 54) with electrical power in accordance with the said check signal.

7. A device according to any one of the preceding claims, **characterised in that** the said regulating unit (21, 32, 23) is connected to a central processing unit (14) by way of a principal communication means (2).

8. A device according to any one of Claims 1 to 6, **characterised in that** one same aerodynamic surface is provided with a check unit (24) at its base, which is connected to the said central processing unit (14) by way of a principal communication means (2), and the said check unit (24) is connected to each regulating unit (34) of the said aerodynamic surface by way of the said secondary communication means (10).

9. A device according to any one of the preceding claims, **characterised in that** the said central processing unit (14) has a diagnostic plug (13) and a central microprocessor (12) having the memory and interfaces thereof.

10. A device according to any one of the preceding claims, **characterised in that** the said temperature sensor (91, 92, 93, 94) is made on a flexible support.

11. A device according to any one of the preceding claims, **characterised in that** the said check unit (24) is made on a flexible support.

12. A device according to any one of the preceding claims, **characterised in that** the said heating element (51, 52, 53, 54) is made on a flexible support.

13. A device according to any one of the preceding claims, **characterised in that** the said heating element (51, 52, 53, 54) is made up of a switching member (8) and a heating surface (5).

14. A device according to any one of the preceding claims, **characterised in that** the said heating surface (5) has at least two heating sections.

15. A device according to any one of the preceding claims, **characterised in that** the said electrical power supply means (1) has redundancy.

16. A device according to any one of the preceding claims, **characterised in that** the said principal communication means (2) is a bifilar bus making use of a bidirectional protocol.

17. A device according to any one of the preceding claims, **characterised in that** the said secondary communication means (10) is a bifilar bus making use of a bidirectional protocol.

18. A device according to any one of the preceding claims, **characterised in that** the said principal communication means (2) and secondary communication means (10) are optical fibres.

19. A device according to any one of Claims 1 to 15, **characterised in that** the said principal communication means (2) and secondary communication means (10) make use of a wireless data transmission mode.

20. A device according to any one of Claims 1 to 15, **characterised in that** the said electrical power supply means (1) and the said principal communication means (2) are made up of a single carrier cable.

## Patentansprüche

1. Enteisungs-/Vereisungsschutz-Vorrichtung für ein Tragwerk eines Luftfahrzeugs, wobei dieses Tragwerk mindestens eine erste aerodynamische Fläche aufweist, wobei diese Enteisungs-/Vereisungsschutz-Vorrichtung mindestens zwei Enteisungs-/Vereisungsschutz-Module (17) aufweist, wobei jeder Modul (17) derart mit einem Heizelement (51, 52, 53, 54) versehen ist, dass die Heizelemente (51, 52, 53, 54) der Module (17) über die gleiche Stromversorgungseinrichtung (1) mit Strom versorgt werden, **dadurch gekennzeichnet, dass** mindestens eine Regulierungseinrichtung (21, 32, 23, 34) die Heizelemente so steuert, dass jeder Modul (17) die Enteisung/den Vereisungsschutz seiner Zone unabhängig von der anderen gewährleistet, wobei die Regulierungseinrichtung (21, 32, 23, 34) auf einem flexiblen Träger hergestellt wird, der leicht in die aerodynamische Fläche integriert werden kann.

2. Vorrichtung nach Anspruch 1, **dadurch gekennzeichnet, dass** mindestens zwei Heizelemente (53) einer aerodynamischen Fläche von der gleichen Regulierungseinrichtung (23) gesteuert werden.

3. Vorrichtung nach Anspruch 2, **dadurch gekennzeichnet, dass** die Regulierungseinrichtung (23) mit mindestens zwei Heizelementen (53) einer aerodynamischen Fläche über ein Nebenverbindungsmittel (10) in Verbindung steht, das in der aerodynamischen Fläche angeordnet ist.

4. Vorrichtung nach Anspruch 1, **dadurch gekennzeichnet, dass** jedes Heizelement (51, 52, 54) einer aerodynamischen Fläche von seiner eigenen Regulierungseinrichtung (21, 32, 34) gesteuert wird.

5. Vorrichtung nach einem der vorhergehenden Ansprüche, **dadurch gekennzeichnet, dass** die Regulierungseinrichtung (21, 32, 23, 34) die Stromversorgung mindestens eines Heizelements (51, 52, 53, 54) steuert, wenn ein erstes Messsignal, das von mindestens einem Temperaturfühler (91, 92, 93, 94) stammt, unter einer vorbestimmten Auslöseschwelle liegt.

6. Vorrichtung nach einem der vorhergehenden Ansprüche, **dadurch gekennzeichnet, dass** die Regulierungseinrichtung (21, 32, 23, 34) ein Prüfsignal empfängt, das von mindestens einem Vereisungsfühler (111, 112, 113, 114) stammt, wobei die Regulierungseinrichtung (31, 32, 23, 34) das Heizelement (51, 52, 53, 54) gemäß dem Prüfsignal mit Strom versorgt.

7. Vorrichtung nach einem der vorhergehenden Ansprüche, **dadurch gekennzeichnet, dass** die Regulierungseinrichtung (31, 32, 23) über ein Hauptverbindungsmittel (2) mit einer zentralen Verarbeitungseinheit (14) verbunden ist.

8. Vorrichtung nach einem der Ansprüche 1 bis 6, **dadurch gekennzeichnet, dass**, da eine aerodynamische Fläche an ihrer Basis mit einer Prüfeinheit (24) versehen ist, die mit der zentralen Verarbeitungseinheit (14) über ein Hauptverbindungsmittel (2) verbunden ist, die Prüfeinheit (24) mit jeder Regulierungseinrichtung (34) der aerodynamischen Fläche über das Nebenverbindungsmittel (10) verbunden ist.

9. Vorrichtung nach einem der vorhergehenden Ansprüche, **dadurch gekennzeichnet, dass** die zentrale Verarbeitungseinheit (14) einen Diagnoseabgriff (13) und einen zentralen Mikroprozessor (12) mit seinem Speicher und seinen Schnittstellen aufweist.

10. Vorrichtung nach einem der vorhergehenden Ansprüche, **dadurch gekennzeichnet, dass** der Temperaturfühler (91, 92, 93, 94) auf einem flexiblen Träger hergestellt wird.

11. Vorrichtung nach einem der vorhergehenden Ansprüche, **dadurch gekennzeichnet, dass** die Prüfeinheit (24) auf einem flexiblen Träger hergestellt wird.

12. Vorrichtung nach einem der vorhergehenden Ansprüche, **dadurch gekennzeichnet, dass** das Heizelement (51, 52, 53, 54) auf einem flexiblen Träger hergestellt wird.

13. Vorrichtung nach einem der vorhergehenden Ansprüche, **dadurch gekennzeichnet, dass** das Heizelement (51, 52, 53, 54) aus einem Schaltelement (8) und einer Heizfläche (5) besteht.

14. Vorrichtung nach einem der vorhergehenden Ansprüche, **dadurch gekennzeichnet, dass** die Heizfläche (5) mindestens zwei Heizabschnitte aufweist.

15. Vorrichtung nach einem der vorhergehenden Ansprüche, **dadurch gekennzeichnet, dass** die Stromversorgungseinrichtung (1) redundiert ist.

16. Vorrichtung nach einem der vorhergehenden Ansprüche, **dadurch gekennzeichnet, dass** das Hauptverbindungsmittel (2) ein Zweidrahtbus ist, der ein bidirektionales Protokoll verwendet.

17. Vorrichtung nach einem der vorhergehenden Ansprüche, **dadurch gekennzeichnet, dass** das Nebenverbindungsmittel (10) ein Zweidrahtbus ist, der ein bidirektionales Protokoll verwendet.

18. Vorrichtung nach einem der vorhergehenden Ansprüche, **dadurch gekennzeichnet, dass** das Haupt- (2) und das Nebenverbindungsmittel (10) Lichtleitfasern sind.

19. Vorrichtung nach einem der Ansprüche 1 bis 15, **dadurch gekennzeichnet, dass** das Haupt- (2) und das Nebenverbindungsmittel (10) einen drahtlosen Datenübertragungsmodus verwenden.

20. Vorrichtung nach einem der Ansprüche 1 bis 15, **dadurch gekennzeichnet, dass** die Stromversorgungseinrichtung (1) sowie das Hauptverbindungsmittel (2) aus einem einzigen Trägerkabel bestehen.
